# DEMANDE DE BREVET EUROPEEN

(11) **EP 1 260 489 A1**
(43) Date de publication de la demande: **27.11.2002**
(21) Numéro de dépôt: 02370021.4
(22) Date de dépôt: 22.05.2002
(51) Int. Cl.: C04B 7/40, C04B 7/22, C04B 7/32, F27B 9/24

(54) **Procédé de fabrication d'un ciment sulfo-alumineux et/ou ferro-alumineux, ciment obtenu par ce procédé et installation de mise en oeuvre**

(30) Priorité: 23.05.2001 FR 0106830
(71) Demandeur: Carrières du Boulonnais, 62250 Ferques (FR)
(72) Inventeur: Beauvent, Guy, 62720 Wierre Effroy (FR); Deletter, Michel, 7050 Jurbise (BE); Holard, Eric, 62100 Calais (FR); Tirlocq, Jacques, 7331 Baudour (BE)
(74) Mandataire: Hennion, Jean-Claude

(57) **Abrégé**

L'invention concerne un procédé de fabrication d'un ciment (1) à partir d'un mélange (2) comprenant CaCO₃, Al₂O₃ et/ou Al(OH)₃, CaSO₄, SiO₂ et/ou un produit contenant de la silice ou des silicates tel que l'argile, ces composés étant présents sous forme anhydre ou hydratée, individuellement ou en combinaison.

Ce procédé est caractérisé en ce que le mélange (2) est traité jusqu'à clinkérisation par déplacement dans un foyer (3) de four (4), en nappe (5) d'épaisseur sensiblement constante, à vitesse sensiblement constante, le long d'un trajet de traitement (6) soumis à un gradient positif de température, et pendant un temps de traitement au cours duquel ce mélange (2) reste en dessous de sa température de fusion, et en ce que le mélange clinkérisé (7) est refroidi en sortie de trajet de traitement (6).

## Description

La présente invention concerne, de façon générale et selon un premier de ses aspects, l'industrie du ciment.

Plus précisément, l'invention concerne, selon son premier aspect, un procédé de fabrication d'un ciment à partir d'un premier cru constitué par un mélange comprenant les composés CaCO₃, Al₂O₃ et/ou Al(OH)₃, CaSO₄, SiO₂ et/ou un produit contenant de la silice ou des silicates tel que l'argile, tous ces composés étant présents sous forme anhydre ou hydratée, individuellement ou en combinaison.

Des ciments de ce type, qui sont appelés ciments sulfo-alumineux, sont utilisés depuis 1974 pour les constructions en Chine. Ces ciments constituent une nouvelle classe de matériaux de construction différents des ciments de type Portland, qui sont connus depuis environ 150 ans, ou des ciments alumineux inventés par la société Lafarge au début du 20^{ème} siècle.

La préparation d'un ciment passe par la cuisson d'un mélange de base ou cru. La qualité du traitement thermique de transformation de ce cru en clinker sera déterminante pour l'obtention d'un ciment ayant des propriétés mécaniques satisfaisantes, lors de son utilisation.

Les fours habituellement rencontrés en cimenterie sont tubulaires et rotatifs. Ces fours sont utilisés depuis plus de cinquante ans pour la préparation de ciments Portland.

De façon connue, un cru pour l'obtention d'un ciment sulfo-alumineux est introduit à une première extrémité du foyer d'un four tubulaire sensiblement horizontal sous la forme d'une farine, puis est chauffé par les gaz de combustion issus d'un brûleur placé à une seconde extrémité du foyer. Le foyer du four tubulaire est monté en rotation autour de son axe de symétrie, et est légèrement incliné vers le brûleur, de sorte que la rotation du tube entraîne la rotation et la chute de la farine vers le brûleur à la seconde extrémité du foyer.

Au fur et à mesure de sa progression dans le four, la farine se réchauffe et subit successivement une déshydratation, une décarbonatation, et une clinkérisation.

Cependant, en raison de la variabilité de la vitesse de déplacement de la farine dans le foyer, ce type de four ne permet pas d'obtenir un clinker de qualité constante. En effet, il arrive que la farine reste collée sur les parois du four, et ait un temps de résidence prolongé. De même, la farine peut passer plus rapidement de la première à la deuxième extrémité du four sans avoir été traitée de façon satisfaisante.

L'utilisation de crus contenant des oxydes de fer, pour l'obtention de ciments ferro-alumineux, dans des conditions analogues à celles décrites ci-dessus pour la préparation de ciments sulfo-alumineux, conduit à une aggravation des problèmes de collage sur les parois du four. Un encroûtement accru du four est alors observable, particulièrement dans la zone de clinkérisation où les oxydes de fer sont à l'état liquide.

Une autre solution peut consister à utiliser un four à foyer fixe, dans lequel le cru est porté progressivement à la température de clinkérisation, puis est ensuite refroidi et broyé.

Cette technique a l'inconvénient d'être onéreuse en raison des pertes thermiques liées au chauffage puis au refroidissement du four entre chaque cycle. De plus, le mode de fonctionnement de ce type de four ne convient pas à la production de grandes quantités de clinker. Le mélange à clinkériser étant immobile, des zones hétérogènes apparaissent dans le clinker, en raison de variations locales de température dans le four.

Dans ce contexte, l'invention a pour but de proposer un procédé permettant une production de ciment sulfo-alumineux de qualité constante dans des conditions industriellement acceptables. Ces conditions incluent la minimisation de la consommation d'énergie, qui est un paramètre déterminant sur le coût du ciment.

A cette fin, le procédé de fabrication de ciment selon l'invention, par ailleurs conforme à la définition générique qu'en donne le préambule ci-dessus, est essentiellement caractérisé en ce que le mélange est traité jusqu'à clinkérisation par déplacement dans un foyer de four, en nappe d'épaisseur sensiblement constante, à vitesse sensiblement constante, le long d'un trajet de traitement soumis à un gradient positif de température, et pendant un temps de traitement au cours duquel ce mélange reste en dessous de sa température de fusion, et en ce que le mélange clinkérisé, constituant un ciment sulfo-alumineux, est refroidi en sortie de trajet de traitement.

Un tel procédé permet de pallier les inconvénients respectifs des fours tubulaires à foyer rotatif et des fours à foyer fixe, par le déplacement à vitesse contrôlée d'une quantité déterminée de mélange à clinkériser dans une atmosphère à température contrôlée et qui peut être régulée.

De plus, en raison de l'agencement même du four, il est possible de faire varier la composition des gaz chauds circulant dans le foyer, et donc de sélectionner une atmosphère localement oxydante ou réductrice, par exemple en évacuant les fumées produites dans la zone de clinkérisation dans l'une quelconque des parties du foyer, ou encore en faisant varier la richesse en oxygène lors de la combustion.

Le mélange peut comprendre en outre Al₂(SO₄)₃ sous forme anhydre ou hydratée. Al₂(SO₄)₃ peut représenter jusqu'à 10% en poids du mélange.

La composition à traiter par le procédé selon l'invention peut comprendre en outre au moins une phase minérale riche en au moins un produit d'oxydation du fer pour l'obtention d'un deuxième cru, ledit ciment constituant alors un ciment ferro-alumineux.

Le mélange peut comprendre en outre un oxyde de métal de transition choisi parmi Sc, Ti, V, Cr, Mn, Fe, Co, Ni, Cu, Zn, Y, Zr, Nb, Mo, Cd, La, Hf, Ta, et W.

L'oxyde de métal de transition peut représenter jusqu'à 5 à 10% du poids du mélange.

Le procédé de l'invention peut comprendre la préparation de la composition par les étapes de (i) mélangeage de chacun de ses constituants avec de l'eau pour l'obtention d'une boue, (ii) filtration de ladite boue pour l'obtention d'un résidu pâteux, (iii) mise en forme dudit résidu pâteux en vue de son introduction dans le four.

Selon le procédé de l'invention, le premier cru pâteux peut être mis en forme par malaxage puis extrusion de préférence en plaques ou en bandes d'épaisseur sensiblement constante.

Le premier cru pâteux peut également être extrudé sous la forme de motifs de géométries variées, dans la mesure où ils permettent d'obtenir un produit clinkérisé de qualité satisfaisante à l'issue du traitement thermique, en raison de la vitesse de diffusion de la chaleur à l'intérieur du profilé. Ainsi, des barres cylindriques ou ovoïdes ou encore des briques creuses peuvent être appropriées.

Lors de l'utilisation d'une composition comprenant des produits d'oxydation du fer, le deuxième cru peut être déposé sur une sous-couche du premier cru, avant clinkérisation.

De préférence, le déplacement de la composition dans le foyer du four s'effectue sur des rouleaux.

Les rouleaux présents dans une zone de clinkérisation du foyer du four peuvent être en carbure de silicium éventuellement revêtus de silicium, de MgO-ZrO₂.

Des revêtements de MgO-ZrO₂ peuvent être obtenus par dépôt sous vide, selon la technique dite CVD (Chemical Vapour Déposition).

Les rouleaux présents dans une zone de clinkérisation du foyer du four peuvent être revêtus d'un acier inoxydable réfractaire ayant un point de fusion supérieur à 1400°C. Ces revêtements en inox peuvent consister en des manchons montés en libre rotation chacun autour d'un rouleau. Un acier inoxydable réfractaire préféré peut être un alliage à haute teneur en nickel, par exemple l'Inconel®, l'Inconel 601® ou encore l'inconel 706®. Il a été observé que lors d'une utilisation entre 1300°C et 1400°C, les manchons montés en libre rotation pouvaient éventuellement fluer, mais présentaient une bonne résistance mécanique à l'écrasement, à l'usure, et à la corrosion. Ils sont donc particulièrement adaptés pour la fabrication de ciment par le procédé de l'invention.

En raison de la composition particulière des crus utilisés dans l'invention, il est nécessaire que la clinkérisation s'effectue en atmosphère oxydante. Cette atmosphère oxydante est obtenue à l'aide d'oxygène gazeux dans la zone de clinkérisation du cru.

Selon le procédé de fabrication de l'invention, le mélange subit, le long du trajet de traitement, successivement (I) éventuellement un séchage et/ou une déshydratation, (II) une décarbonatation, et (III) une clinkérisation.

Le mélange clinkérisé obtenu par un procédé conforme à l'invention peut être broyé et mélangé à du calcaire et/ou du gypse et/ou de l'anhydrite, et éventuellement des métaux lourds ou des composés d'oxydation de métaux lourds.

Selon un second de ses aspects, l'invention concerne un ciment obtenu selon un procédé conforme à son premier aspect.

Selon un troisième de ses aspects, l'invention concerne une installation de fabrication d'un ciment comprenant une cuve et un mélangeur pour préparer un premier cru constitué par un mélange comprenant les composés CaCO₃, Al₂O₃ et/ou Al(OH)₃, CaSO₄, SiO₂ et/ou un produit contenant de la silice ou des silicates tel que l'argile. Tous ces composés sont présents sous forme anhydre ou hydratée, individuellement ou en combinaison.

L'installation comprend un four et un foyer de four, pour traiter le mélange jusqu'à clinkérisation par déplacement dans ledit foyer de four. Le déplacement s'effectue en nappe d'épaisseur sensiblement constante, à vitesse sensiblement constante, le long d'un trajet de traitement soumis à un gradient positif de température, et pendant un temps de traitement au cours duquel ce mélange reste en dessous de sa température de fusion. L'installation comprend des appareils de refroidissement rapide du mélange clinkérisé, en sortie de trajet de traitement.

Le refroidissement rapide du clinker peut s'effectuer avantageusement au moyen d'azote gazeux refroidi ou encore d'azote liquide. L'azote utilisé pour le refroidissement du clinker peut provenir avantageusement de la distillation de l'air dans une installation permettant de produire simultanément d'une part de l'oxygène liquide ou gazeux, et d'autre part de l'azote gazeux ou liquide. L'oxygène produit est utilisé lors de l'étape de clinkérisation.

Selon un mode de réalisation préféré, l'installation de l'invention peut comporter (i) un premier mélangeur associé à une cuve pour l'obtention d'une boue lors de la combinaison du mélange avec de l'eau, (ii) un filtre presse pour la filtration de ladite boue afin d'obtenir un résidu pâteux, et (iii) une extrudeuse pour la mise en forme dudit résidu pâteux, en vue de son introduction dans le four.

Cette installation peut en outre comporter un malaxeur pour l'homogénéisation du résidu pâteux issu de la filtration, et une extrudeuse pour sa mise en forme en plaques ou en bandes d'épaisseur sensiblement constante.

Le foyer du four peut comporter des rouleaux pour le déplacement du mélange.

L'installation selon l'invention peut mettre en oeuvre des moyens pour préparer un deuxième cru de ciment comportant en outre au moins une phase minérale riche en au moins un produit d'oxydation du fer. Un tel deuxième cru fournit, après clinkérisation, un ciment ferro-alumineux.

L'installation selon l'invention peut en outre comprendre des moyens pour déposer le deuxième cru sur une sous-couche du premier cru, avant clinkérisation.

L'installation selon l'invention peut mettre en oeuvre un premier broyeur de mélange clinkérisé, un deuxième mélangeur dans lequel le mélange clinkérisé broyé est additionné de calcaire et/ou de gypse broyés et/ou d'anhydrite broyé, et éventuellement de métaux lourds ou de composés d'oxydation de métaux lourds broyés.

L'invention met en oeuvre une pluralité de silos ou trémies, une pluralité de convoyeurs, et une pluralité de conduites pour le stockage et le transport des produits destinés à la fabrication du ciment sulfo-alumineux.

L'invention sera mieux comprise et d'autres buts, caractéristiques, détails et avantages de celle-ci apparaîtront plus clairement au cours de la description qui va suivre en se référant aux dessins schématiques annexés, donnés uniquement à titre d'exemples non limitatifs et dans lesquels:
- La figure 1 représente une coupe longitudinale d'un four utilisable pour la mise en oeuvre d'un procédé conforme à l'invention;
- La figure 2 représente une coupe transversale d'un four utilisable pour la mise en oeuvre d'un procédé conforme à l'invention; et
- La figure 3 représente un schéma synoptique d'une installation pour la mise en oeuvre d'un procédé conforme à l'invention.

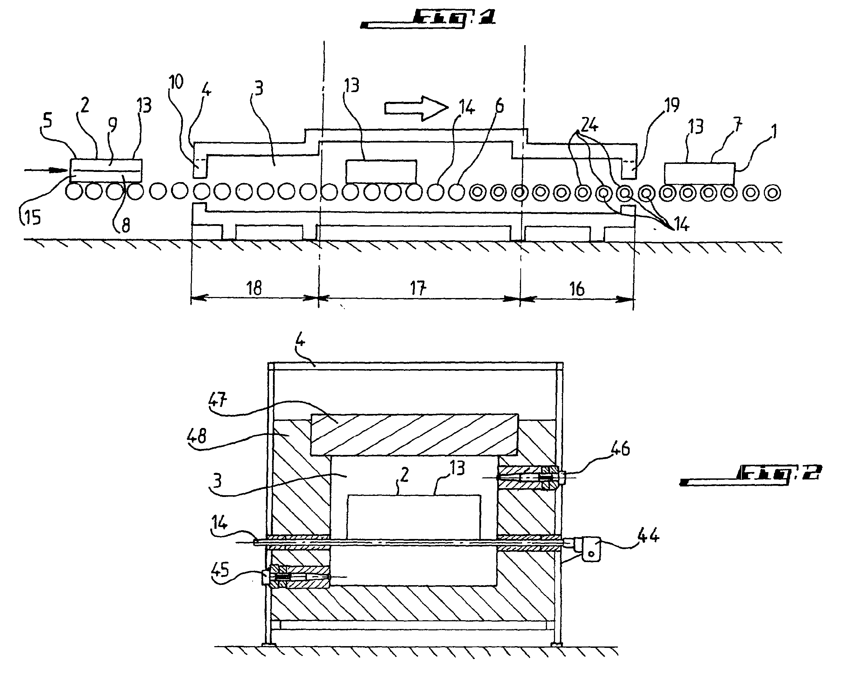

La figure 1 représente schématiquement un four 4 en coupe longitudinale, comportant des plaques 13 qui constituent le produit devant subir un traitement thermique. Ces plaques 13 sont déposées sur des rouleaux 14, qui servent à les déplacer le long d'un foyer 3 du four 4.

Les plaques 13 entrent dans le four par une ouverture d'entrée 10 où elles subissent un réchauffage progressif dans une zone de séchage et/ou de déshydratation 18 à une température allant d'environ 250°C à environ 500°C. Les plaques 13 passent ensuite dans une zone de décarbonatation 17 où elles sont portées à une température plus élevée allant d'environ 500°C à environ 1000°C. Enfin, les plaques 13 sont amenées en atmosphère oxydante dans une zone de clinkérisation 16 où elles sont portées à une température allant d'environ 1000°C à environ 1400°C, sans toutefois passer par un état pâteux survenant habituellement entre 1300°C et 1350°C, en l'absence de composés modifiant la température de fusion du mélange 2. Il est souhaitable d'éviter d'atteindre l'état pâteux, car celui-ci est responsable de phénomènes de collage sur les rouleaux 14.

Afin d'éviter les collages sur les rouleaux dans la zone de clinkérisation 16, il préférable d'utiliser des rouleaux en carbure de silicium, ou en carbure de silicium imprégné de silicium ou de MgO-Zr ou de tout type de revêtement non mouillant pour les minéraux fondus contenus dans le cru solide, ces minéraux fondus étant responsables du collage sur les rouleaux.

L'utilisation de fondants, notamment ceux contenant les éléments bore, phosphore, et fluor, abaissent la température de fusion du mélange. Dans ce cas, la température maximale de clinkérisation sera réduite.

De même, l'utilisation de certains composés augmentera la température de fusion du mélange, par exemple jusqu'à 1400-1500°C avec en corollaire une modification des proportions entre phases cristallines et amorphes, ainsi que des proportions des composés minéraux constituant le clinker.

Alternativement, et de façon non représentée, les plaques 13 peuvent constituer une bande ininterrompue circulant de la zone de séchage et/ou de déshydratation 18 à la zone de clinkérisation 16 du foyer du four.

Le temps de séjour moyen des plaques ou bandes 13 dans chacune des zones 18 à 16 est semblable à celui habituellement nécessaire lors de l'utilisation de fours rotatifs. Le temps de séjour dépend notamment des dimensions des plaques ou bandes 13, de la puissance du four, de la capacité calorifique et de la conductivité thermique des plaques ou bandes 13 et des gaz circulant dans le foyer du four. Ces paramètres peuvent être déterminés, selon des techniques connues faisant appel à une connaissance des phases minérales des divers clinkers, par des spécialistes de la fabrication des clinkers et des ciments.

Après passage dans la zone de clinkérisation 16, les plaques 13 quittent le four par une ouverture de sortie 19.

Les plaques 13 sont constituées par un mélange 2 comprenant les composés CaCO₃, Al₂O₃ et/ou Al(OH)₃, CaSO₄, SiO₂ et/ou un produit contenant de la silice ou des silicates tel que l'argile, tous ces composés étant présents sous forme anhydre ou hydratée, individuellement
ou en combinaison.

Le mélange 2 constitue un premier cru 8, avant son introduction dans le four 4.

Les proportions habituelles en poids des différents constituants du premier cru sont :
- Al₂O₃ : 20-55%
- Argile : 0-30%
- Calcaire : 10-35%
- Gypse : 10-15%
- Teneur totale en SiO₂ : 1-15%.

De façon préférée :
- Al₂O₃ est sous forme de bauxite hydroxylée, de préférence de la gibbsite : Al(OH)₃, ou de la boehmite : AlO(OH), ou du diaspore : Al₂O₃.H₂O, ou une combinaison d'au moins deux de ces composés.
- L'argile provient de boues de lavage des calcaires de carrières de calcaire, et constituent alors des fines argilo-calcaires (FAC).
- Le calcaire est d'origine indifférente.
- Le gypse peut être remplacé par de l'anhydrite ou n'importe quel sulfate de calcium hydraté.
- SiO₂ peut provenir de fumées de silice ou de la bauxite ou de l'argile lorsqu'elles sont présentes.

Le mélange 2, qui est traité jusqu'à clinkérisation par déplacement dans le foyer 3 du four 4, en nappe 5 d'épaisseur sensiblement constante, est déplacé à vitesse sensiblement constante, le long d'un trajet de traitement 6 soumis à un gradient positif de température, tel que décrit plus haut.

De façon non représentée, les plaques 13, constituant alors un mélange clinkérisé 7, sont ensuite refroidies à leur sortie du four.

Les plaques 13 peuvent en outre comprendre au moins une phase minérale riche en au moins un produit d'oxydation du fer pour l'obtention d'un deuxième cru, pour l'obtention d'un ciment ferro-alumineux.

Un produit d'oxydation du fer utilisé pourra être Fe₂O₃, FeO(OH), Fe₃O₄, FeO, ou encore Fe(OH)₃. De façon préférée, le produit d'oxydation du fer sera issu de bauxite riche en fer.

De façon habituelle, la bauxite riche en fer naturellement disponible comprendra 65 à 95% d'Al₂O₃, 3 à 35% de Fe₂O₃, 0 à 13% de SiO₂, 0 à 7% de TiO₂.

Les proportions habituelles en poids de ces différents constituants sont :
- Bauxite riche en fer : 10-45%
- Argile : 0-30%
- Calcaire : 25-45%
- Gypse : 10-15%
- Teneur totale en SiO₂ : 1-15%.

Le mélange 2 comprenant du fer constitue un deuxième cru 9, avant son introduction dans le four 4.

Lors de la préparation du ciment, le deuxième cru 9 est de préférence déposé sur une sous-couche 15 du premier cru 8, avant introduction dans le four. Cette façon de procéder permet d'éviter le contact entre les rouleaux et le deuxième cru, riche en fer, responsable des problèmes de collage.

Selon une variante non représentée, une autre solution pour éviter le collage du deuxième cru sur les rouleaux peut consister en le traitement thermique du mélange 2 dans des caissettes réfractaires. Dans ce cas, l'utilisation des composants du mélange 2 sous la forme de poudre, sèche ou humide, sera possible.

Selon une autre variante non représentée, des poudres telles que des muscovites, du talc, ou encore de la silice pourront également être déposées sur au moins une surface de cru destinée à être en contact avec les rouleaux.

Selon une autre variante, chacun des rouleaux 14 de la zone de clinkérisation 16 peut être revêtu d'un manchon 24 fabriqué en acier inoxydable réfractaire. Ce manchon 24 est monté en libre rotation autour du rouleau 14.

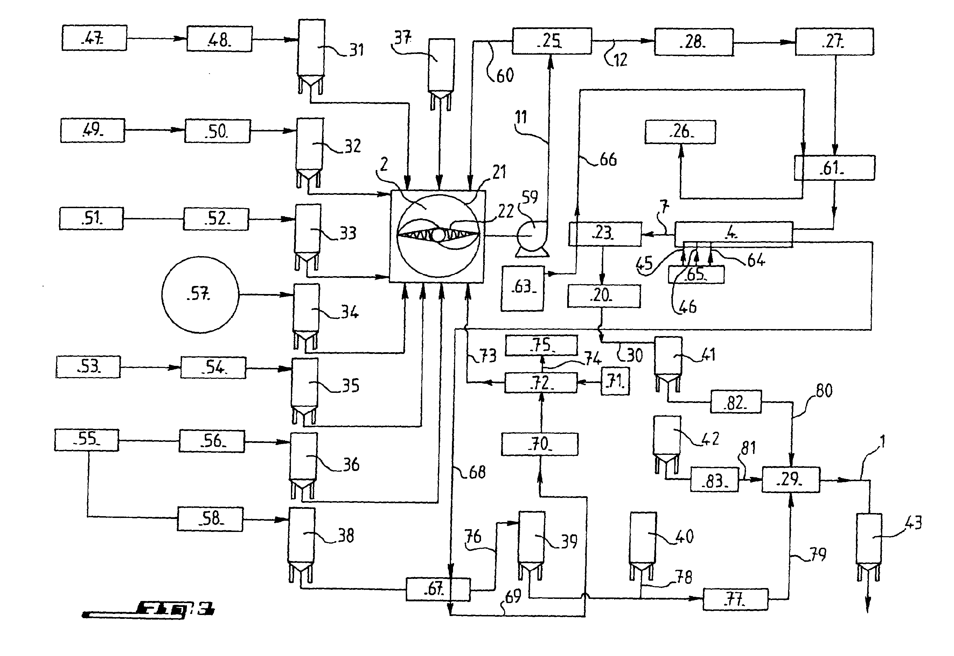

Sur la figure 2, le four 4, utilisable pour la mise en oeuvre d'un procédé conforme à l'invention est en fonctionnement.

Dans le foyer 3, on peut observer une plaque 13 constituée par un mélange 2, supportée et transportée par un rouleau 14.

La rotation du rouleau 14 est assurée par un moteur 44.

Au-dessus et en dessous de la plaque 13, des brûleurs 45 et 46 permettent de porter la plaque 13 à la température désirée.

Afin de limiter les pertes thermiques, le four 4 est garni de pièces en matériaux réfractaires 47, 48, pouvant être en brique ou en amiante.

Sur la figure 3 est représenté un schéma synoptique d'une installation pour la mise en oeuvre d'un procédé conforme à l'invention particulièrement préféré, dit « par voie humide ».

L'installation de fabrication du ciment 1 comprend une cuve 21 et un premier mélangeur 22, pour préparer un mélange 2. Le mélange 2 contient différents constituants issus de silos ou trémies 31 à 37, en proportions variables.

Ainsi, un premier silo 31 contient un additif 47 sous forme de poudre. Cette poudre est obtenue par broyage de l'additif 47 dans un deuxième broyeur 48. L'additif 47 peut être constitué par un composé d'un métal de transition choisi parmi Sc, Ti, V, Cr, Mn, Co, Ni, Cu, Zn, Y, Zr, Nb, Mo, Cd, La, Hf, Ta, et W. Le composé de métal de transition sera préférentiellement choisi parmi les hydroxydes, oxydes et sulfates. Un composé de métal de transition plus préféré sera un oxyde.

L'oxyde de métal de transition peut représenter jusqu'à 5 à 10% du poids du mélange.

L'additif 47 est, avant introduction dans la cuve 21, mélangé avec de l'eau.

De la bauxite 49 est broyée dans un troisième broyeur 50, puis est stockée dans un deuxième silo 32.

Un troisième silo 33 fait office de cuve pour le stockage de gibbsite 51 après broyage en présence d'eau dans un quatrième broyeur 52.

Un quatrième silo 34 sert de réservoir de stockage de fines argilo-calcaires 57, issues du lavage de calcaire provenant de carrières de calcaire.

Du calcaire 53 est broyé dans un cinquième broyeur 54, puis est stocké dans un cinquième silo 35.

Une première partie du gypse 55 est broyé en présence d'eau dans un sixième broyeur 56, puis est stocké dans un sixième silo ou cuve 36.

Enfin, un septième silo 37 contient un « correcteur » destiné à modifier les propriétés physico-chimiques du mélange 2 en fonction des qualités des crus, afin d'assurer une qualité de produit constante. Ce « correcteur » est un des produits contenus dans les silos 31 à 36.

Le mélange 2, qui constitue une boue 11 après homogénéisation dans la cuve 21, est collecté par une pompe 49. Cette dernière envoie la boue 11 dans un filtre presse 25. Le filtre presse 25 produit d'une part un filtrat 60 qui retourne vers la cuve 21, et d'autre part un résidu pâteux 12.

Le résidu pâteux 12 est ensuite malaxé dans un malaxeur 28 puis est mis en forme à l'aide d'une extrudeuse 27.

L'extrudeuse 27 produit des plaques ou des bandes 13. Ces dernières sont ensuite stockées en moyenne pendant deux à trois jours, puis sont séchées dans un premier séchoir 61.

Les plaques ou bandes 13 séchées sont ensuite introduites dans le four 4 pour fournir un clinker 7 après traitement thermique. Le clinker 7 est ensuite refroidi dans un appareil de refroidissement rapide 23.

Un appareil de refroidissent rapide 23 convenable peut être un refroidisseur à grille fixe et barreaux transversaux mobiles en va-et-vient, plus connu sous le nom de « cross-bar cooler® », de la société FLS (Copenhague, Danemark).

Le clinker 7 refroidi est alors broyé dans un premier broyeur 20 pour fournir un mélange clinkérisé broyé 30.

Le mélange clinkérisé broyé 30 est stocké dans un onzième silo ou trémie 41.

L'appareil de refroidissement rapide 23 est alimenté par un fluide froid 63. Ce fluide froid 63 peut être de l'air frais ou de l'azote liquide pulvérisé. Un gaz réchauffé 66 obtenu en sortie de l'appareil de refroidissement sert ensuite au séchage des plaques ou bandes 13 dans le premier séchoir 61. Du gaz humide obtenu en sortie de séchoir est évacué vers une première cheminée 26.

Selon un mode de réalisation non représenté, une partie du gaz réchauffé 66 issu de l'appareil de refroidissement rapide 23 peut être utilisé comme comburant pour des brûleurs 45, 46, 64 installés sur le four 4, dans la mesure où le gaz réchauffé 66 contient de l'oxygène.

Les brûleurs 45, 46, 64 sont alimentés avec un carburant 65. Le carburant 65 peut être avantageusement du gaz naturel ou un de ses produits de séparation. De façon préférée, le carburant 65 peut être issu de déchets industriels, comme des fuels lourds riches en soufre ou encore des farines animales.

Une deuxième partie du gypse 55 est broyé à sec dans un septième broyeur 58, puis est stocké dans un huitième silo 38. Le huitième silo 38 alimente en gypse un deuxième séchoir 67. Le deuxième séchoir 67 est alimenté en gaz de combustion chauds 68 provenant du four 4.

Des gaz de combustion refroidis 69 sont collectés en sortie du deuxième séchoir 67 puis sont dépoussiérés dans un dépoussiéreur 70.

Le depoussiereur 70 peut etre un appareil de filtration, ou un précipitateur électrostatique.

Les gaz issus du dépoussiéreur 70 sont ensuite lavés par pulvérisation d'eau 71 dans une installation d'abattage des fumées 72. Selon des variantes non représentées, il est possible d'abattre les fumées avec du calcaire, du gypse, un cru humide, ou encore de la chaux.

On collecte d'une part, une eau de lavage 73 qui est envoyée dans la cuve 21, et d'autre part des fumées dépoussiérées abattues 74, qui sont évacuées dans une deuxième cheminée 75.

Du gypse séché 76, obtenu en sortie du deuxième séchoir 67, est stocké dans un neuvième silo 39. Ce dernier alimente en gypse sec un huitième broyeur 77.

Le huitième broyeur 77 est également alimenté en un composant supplémentaire 78 stocké dans un dixième silo 40. Ce composant supplémentaire 78 peut être par exemple du calcaire, du calcaire blanc, du borogypse sec, du phosphogypse sec, ou encore de l'anhydrite.

Le composant supplémentaire 78 et le gypse sec 76 sont utiles comme additifs pour la préparation du ciment 1, notamment pour la modification de propriétés telles que la vitesse de prise, ou la résistance mécanique. Les quantités à ajouter sont à apprécier au cas par cas, en fonction des besoins, et font partie des compétences générales des formulateurs de ciments.

Le huitième broyeur 77 fournit une première farine 79 qui alimente un deuxième mélangeur 29 qui est un mélangeur à poudre.

Le deuxième mélangeur 29 est aussi alimenté (i) en une deuxième farine 80 provenant du broyage du clinker broyé 30 dans un neuvième broyeur 82, et (ii) en en une troisième farine 81 provenant du broyage dans un dixième broyeur 83 d'un additif stocké dans un douzième silo 42. Cet additif peut être un oxyde de métal de transition, ou un oxyde de plomb, d'étain, d'antimoine ou de bismuth.

Le douzième silo 42 peut servir au stockage de composés de métaux lourds, par exemple sous la forme d'oxydes ou de sulfures. L'encapsulation de tels composés de métaux lourds est possible en raison de la très faible lixiviation observée lors de l'utilisation de ciments obtenus par un procédé conforme à l'invention.

Le deuxième mélangeur 29 produit un ciment 1 qui est stocké dans un treizième silo 43. Le ciment 1 est ensuite soutiré du treizième silo 43 pour être conditionné en sacs ou en vrac et quitte l'installation.

Selon un mode de réalisation non représenté, les plaques 13 peuvent être préparées par compression des constituants du mélange 2 sous forme de poudre, à la façon d'un comprimé. Dans ce cas, il faut s'assurer d'une bonne homogénéité de la poudre. Afin d'améliorer la cohésion du mélange 2 formant les plaques, il est possible d'effectuer la compression en présence de vapeur. Bien entendu, l'étape de mélangeage par le premier mélangeur 22, dans la cuve 21 est à présent inutile, et l'utilisation d'eau est proscrite.

Selon une variante non représentée, l'installation peut comprendre des moyens pour déposer un deuxième cru 9 contenant du fer, sur une sous-couche d'un premier cru 8 ne contenant pas une quantité significative de fer, avant clinkérisation.

Par exemple, le dépôt d'une couche du deuxième cru 9 sur une sous-couche du premier cru 8 peut s'effectuer au moment de l'extrusion, ou bien lors de l'étape de stockage.

### Exemple 1 :

Les produits suivants sont mélangés dans la cuve 21 (tous les pourcentages sont indiqués en poids sur base sèche):

| | |
|---|---|
| Calcaire blanc | 35% |
| Bauxite pauvre en fer ; (Analyse : Fe₂O₃ < 5% ; SiO₂ 2% ; Al₂O₃ 59% ; CaO 4% ; SO₃ 6%) | 52% |
| Gypse | 13% |

Les produits utilisés ont avantageusement une granulométrie allant de plus de 0 µm à environ 100µm.

Ces derniers sont mélangés avec de l'eau et homogénéisés pendant 2 à 6 heures et subissent le traitement détaillé à la figure 3 sans spécification particulière jusqu'à leur introduction dans le four 4.

Dans le four 4, le cru est séché et préchauffé jusqu'à 750°C pendant 0,5 à 1 heure dans la zone de séchage et/ou de déshydratation 18, puis est décarbonaté par chauffage jusqu'à 1000°C pendant 0,6 à 1,3 heure dans la zone de décarbonatation 17, pour finalement être clinkérisé par chauffage jusqu'à 1330-1400°C pendant 0,15 à 0,85 heure.

Le mélange clinkérisé 7, obtenu en sortie de four est refroidi dans l'appareil de refroidissent rapide 23 qui est ici un refroidisseur à grille fixe et barreaux transversaux mobiles en va-et-vient.

La vitesse de refroidissement du clinker entre 1350 et 900°C est comprise de préférence entre 400 et 1100°C/minute, puis la suite du refroidissement doit être contrôlée comme c'est le cas pour les ciments Portland, en particulier entre 700 et 500°C où un refroidissement rapide est à nouveau requis afin d'éviter des transitions de phase indésirables, notamment la transformation de la phase C₂S_{β} en C₂S_{γ}.

Le clinker refroidi est ensuite broyé et subit le traitement préconisé dans la description de la figure 3 pour l'obtention d'un ciment sulfo-alumineux. Ce traitement consiste à mélanger des additifs au clinker pour l'obtention d'un ciment sulfo-alumineux ayant des propriétés spécifiques. Ainsi, on obtient des ciments à prise accélérée, ralentie, ou encore à résistance accrue, en utilisant des composés qui sont habituellement utilisés par les spécialistes de la formulation des ciments.

### Exemple 2 :

L'exemple 1 est reproduit dans des conditions similaires, excepté pour :
1) la composition du mélange 2 qui est la suivante (pourcentages indiqués en poids sur base sèche):

| | |
|---|---|
| Fines argilo-calcaires | 25% |
| Calcaire | 29% |
| Bauxite riche en fer ; (Analyse : Fe₂O₃ 14% ; SiO₂ 2% ; Al₂O₃ 55% ; CaO 4% ; SO₃ 6%) | 34% |
| Gypse | 12% |

2) Le mélange 2, qui constitue un deuxième cru 9, est déposé sur une sous-couche 15 du premier cru 8 préparé selon l'exemple 1, avant son introduction dans le foyer 3 du four 4.
3) la température de clinkérisation est comprise entre 1300-1350°C.

Le clinker refroidi est ensuite broyé et subit le traitement préconisé dans la description de la figure 3 pour l'obtention d'un ciment ferro-alumineux.

### Exemple 3 :

Les données et compositions sont identiques à celles de l'exemple 1, sauf pour la composition de la bauxite pauvre en fer (Analyse : Fe₂O₃ 3% ; SiO₂ 17% ; Al₂O₃ 80%).

### Exemple 4 :

Les données et compositions sont identiques à celles de l'exemple 1, sauf pour la bauxite pauvre en fer (Analyse : Fe₂O₃ 5% ; SiO₂ 10% ; Al₂O₃ 80% ; TiO₂ 5%).

## Revendications

1. Procédé de fabrication d'un ciment (1) à partir d'un premier cru (8) constitué par un mélange (2) comprenant les composés CaCO₃, Al₂O₃ et/ou Al(OH)₃, CaSO₄, SiO₂ et/ou un produit contenant de la silice ou des silicates tel que l'argile, tous ces composés étant présents sous forme anhydre ou hydratée, individuellement ou en combinaison, **caractérisé en ce que** le mélange (2) est traité jusqu'à clinkérisation par déplacement dans un foyer (3) de four (4), en nappe (5) d'épaisseur sensiblement constante, à vitesse sensiblement constante, le long d'un trajet de traitement (6) soumis à un gradient positif de température, et pendant un temps de traitement au cours duquel ce mélange (2) reste en dessous de sa température de fusion, et **en ce que** le mélange clinkérisé (7), constituant un ciment sulfo-alumineux, est refroidi en sortie de trajet de traitement (6).

2. Procédé de fabrication d'un ciment (1) selon la revendication 1, **caractérisé en ce que** le mélange (2) comprend en outre Al₂(SO₄)₃ sous forme anhydre ou hydratée.

3. Procédé de fabrication d'un ciment (1) selon la revendication 2, **caractérisé en ce que** Al₂(SO₄)₃ est ajouté au mélange (2) jusqu'à concurrence de 10% en poids.

4. Procédé de fabrication d'un ciment (1) selon l'une quelconque des revendications précédentes, **caractérisé en ce que** le mélange (2) comprend en outre au moins une phase minérale riche en au moins un produit d'oxydation du fer pour l'obtention d'un deuxième cru (9), ledit ciment constituant alors un ciment ferro-alumineux.

5. Procédé de fabrication d'un ciment (1) selon l'une quelconque des revendications précédentes, **caractérisé en ce que** le mélange (2) comprend en outre un oxyde de métal de transition choisi parmi Sc, Ti, V, Cr, Mn, Co, Ni, Cu, Zn, Y, Zr, Nb, Mo, Cd, La, Hf, Ta, et W.

6. Procédé de fabrication d'un ciment (1) selon la revendication 5, **caractérisé en ce que** le mélange (2) comprend jusqu'à 5 à 10% en poids d'oxyde de métal de transition.

7. Procédé de fabrication d'un ciment (1) selon l'une quelconque des revendications précédentes, **caractérisé en ce que** le mélange (2) est préparé par les étapes de (i) mélangeage de chacun de ses constituants avec de l'eau pour l'obtention d'une boue (11), (ii) filtration de ladite boue (11) pour l'obtention d'un résidu pâteux (12), (iii) mise en forme dudit résidu pâteux (12) en vue de son introduction dans le foyer (3) du four (4).

8. Procédé de fabrication d'un ciment (1) selon la revendication 7, **caractérisé en ce que** le résidu pâteux (12) est mis en forme par malaxage puis extrusion en plaques ou en bandes (13) d'épaisseur sensiblement constante.

9. Procédé de fabrication d'un ciment (1) selon l'une quelconque des revendications précédentes en combinaison avec la revendication 4, **caractérisé en ce que** le deuxième cru (9) est déposé sur une sous-couche (15) du premier cru (8), avant clinkérisation.

10. Procédé de fabrication d'un ciment sulfo-alumineux (1) selon l'une quelconque des revendications précédentes, **caractérisé en ce que** le déplacement du mélange (2) dans le foyer (3) du four (4) s'effectue sur des rouleaux (14).

11. Procédé de fabrication d'un ciment (1) selon la revendication 10, **caractérisé en ce qu'**au moins les rouleaux (14) présents dans une zone de clinkérisation (16) du foyer (3) du four (4) sont en carbure de silicium.

12. Procédé de fabrication d'un ciment (1) selon la revendication 11, **caractérisé en ce qu'**au moins les rouleaux (14) présents dans la zone de clinkérisation (16) du foyer (3) du four (4) sont revêtus de silicium et/ou de MgO-ZrO₂.

13. Procédé de fabrication d'un ciment (1) selon la revendication 10, **caractérisé en ce qu'**au moins les rouleaux (14) présents dans une zone de clinkérisation (16) du foyer (3) du four (4) sont revêtus d'un acier inoxydable réfractaire ayant un point de fusion supérieur à 1400°C.

14. Procédé de fabrication d'un ciment (1) selon la revendication 13, **caractérisé en ce que** le revêtement en acier inoxydable réfractaire consiste en des manchons (24) montés en libre rotation chacun autour d'un rouleau (14).

15. Procédé de fabrication d'un ciment (1) selon la revendication 13 ou la revendication 14, **caractérisé en ce que** le revêtement en acier inoxydable réfractaire est un alliage à haute teneur en nickel du type Inconel®.

16. Procédé de fabrication d'un ciment (1) selon l'une quelconque des revendications précédentes, **caractérisé en ce que** la clinkérisation s'effectue en présence d'oxygène.

17. Procédé de fabrication d'un ciment (1) selon l'une quelconque des revendications précédentes, **caractérisé en ce que** le mélange (2) est soumis, le long du trajet de traitement (6), successivement à (I) éventuellement un séchage et/ou une déshydratation, (II) une décarbonatation, et (III) une clinkérisation.

18. Procédé de fabrication d'un ciment (1) selon l'une quelconque des revendications précédentes, **caractérisé en ce que** le mélange clinkérisé (7) est broyé et mélangé à du calcaire et/ou du gypse et/ou de l'anhydrite, et éventuellement des métaux lourds ou des composés d'oxydation de métaux lourds.

19. Ciment (1) obtenu par un procédé selon l'une quelconque des revendications précédentes.

20. Installation de fabrication d'un ciment (1) comprenant une cuve (21) et un premier mélangeur (22) pour préparer un premier cru (8) constitué par un mélange (2) comprenant les composés CaCO₃, Al₂O₃ et/ou Al(OH)₃, CaSO₄, SiO₂ et/ou un produit contenant de la silice ou des silicates tel que l'argile, tous ces composés étant présents sous forme anhydre ou hydratée, individuellement ou en combinaison, **caractérisée en ce que** l'installation comprend un four (4) et un foyer de four (3), pour traiter le mélange (2) jusqu'à clinkérisation par déplacement dans ledit foyer de four (3), en nappe (5) d'épaisseur sensiblement constante, à vitesse sensiblement constante, le long d'un trajet de traitement (6) soumis à un gradient positif de température, et pendant un temps de traitement au cours duquel ce mélange (2) reste en dessous de sa température de fusion, et **en ce que** l'installation comprend un appareil de refroidissement rapide (23) du mélange clinkérisé (7), en sortie de trajet de traitement (6).

21. Installation de fabrication d'un ciment (1) selon la revendication 20, **caractérisée en ce qu'**elle comporte (i) un premier mélangeur (22) associé à une cuve (21) pour l'obtention d'une boue (11) lors de la combinaison du mélange (2) avec de l'eau, (ii) un filtre presse (25) pour la filtration de ladite boue (11) afin d'obtenir le résidu pâteux (12), et (iii) une extrudeuse (27) pour la mise en forme dudit résidu pâteux (12) en plaques ou en bandes (13) d'épaisseur sensiblement constante, en vue de leur introduction dans le four (4).

22. Installation de fabrication d'un ciment (1) selon la revendication 21, **caractérisée en ce qu'**elle comporte un malaxeur (28) pour l'homogénéisation du résidu pâteux (12), préalablement à son introduction dans l'extrudeuse (27).

23. Installation de fabrication d'un ciment (1) selon l'une quelconque des revendications 20 à 22, **caractérisée en ce que** le foyer (3) du four (4) comporte des rouleaux (14) pour le déplacement du mélange (2).

24. Installation de fabrication d'un ciment (1) selon l'une quelconque des revendications 20 à 23, **caractérisée en ce qu'**elle comprend des moyens pour ajouter au moins une phase minérale riche en au moins un produit d'oxydation du fer pour l'obtention d'un deuxième cru (9).

25. Installation de fabrication d'un ciment (1) selon la revendication 24, **caractérisée en ce qu'**elle comprend des moyens pour déposer le deuxième cru (9) sur une sous-couche (15) du premier cru (8), avant clinkérisation.

26. Installation de fabrication d'un ciment (1) selon l'une quelconque des revendications 20 à 25, **caractérisée en ce qu'**elle comprend un premier broyeur (20) de mélange clinkérisé (7) pour l'obtention d'un mélange clinkérisé broyé (30), un deuxième mélangeur (29) dans lequel le mélange clinkérisé broyé (30) est additionné de calcaire et/ou de gypse broyés, et éventuellement de métaux lourds ou de composés d'oxydation de métaux lourds broyés.
